# EUROPÄISCHE PATENTSCHRIFT

(11) **EP 3 933 991 B1**
(45) Veröffentlichungstag und Bekanntmachung des Hinweises auf die Patenterteilung: **07.08.2024**
(21) Anmeldenummer: 21180236.8
(22) Anmeldetag: 18.06.2021
(51) Int. Cl.: H01M 8/04007, H01M 8/04225, H01M 8/04223, H05B 6/10

(54) **VERFAHREN ZUM AUFHEIZEN EINES BRENNSTOFFZELLENSYSTEMS UND BRENNSTOFFZELLENSYSTEM**
METHOD FOR HEATING A FUEL CELL SYSTEM AND FUEL CELL SYSTEM
PROCÉDÉ DE CHAUFFAGE D'UN SYSTÈME DE PILE À COMBUSTIBLE ET SYSTÈME DE PILE À COMBUSTIBLE

(30) Priorität: 30.06.2020 DE 102020208178
(43) Veröffentlichungstag der Anmeldung: 05.01.2022
(73) Patentinhaber: Robert Bosch GmbH, 70442 Stuttgart (DE)
(72) Erfinder: Wessner, Jochen, 73728 Esslingen (DE); Katz, Martin, 70469 Stuttgart (DE)

(56) Entgegenhaltungen:
- DE-A1- 102011 002 729
- DE-A1- 102019 218 838
- DE-A1- 3 731 762
- JP-A- 2007 227 209
- US-B2- 7 831 133

## Beschreibung

Die Erfindung betrifft ein Verfahren zum Aufheizen eines Brennstoffzellensystems gemäß dem Oberbegriff des Anspruchs 1. Darüber hinaus betrifft die Erfindung ein Brennstoffzellensystem, das mit Hilfe des erfindungsgemäßen Verfahrens aufheizbar ist.

### Stand der Technik

Eine Brennstoffzelle wandelt Wasserstoff mit Hilfe von Sauerstoff zu elektrischer Energie, wobei Abwärme und Wasser erzeugt werden. Die Brennstoffzelle weist hierzu eine Membran-Elektroden-Anordnung (MEA) auf, die über einen Anodenpfad mit Wasserstoff und einen Kathodenpfad mit Sauerstoff versorgt wird. Während der Wasserstoff üblicherweise in einem Tank bevorratet wird, kann der Sauerstoff der Umgebungsluft entnommen werden.

In der praktischen Anwendung werden mehrere solcher Brennstoffzellen zu einem Brennstoffzellenstapel oder "Stack" angeordnet, um die erzeugte elektrische Spannung zu erhöhen. Zur Versorgung jeder einzelnen Brennstoffzelle mit Wasserstoff und Luft, ist der Brennstoffzellenstapel von Versorgungskanälen durchzogen. Weitere den Brennstoffzellenstapel durchsetzende Kanäle dienen dem Abtransport des aus den Brennstoffzellen austretenden abgereicherten Anodenabgases sowie der abgereicherten feuchten Luft.

Systematisch hat sich zur Versorgung der Brennstoffzelle mit Wasserstoff ein Ansatz etabliert, bei dem das noch wasserstoffhaltige Anodenabgas mittels einer Gasfördereinrichtung den Brennstoffzellen wieder zugeführt bzw. rezirkuliert wird. Zuvor muss jedoch im Anodenabgas enthaltenes Wasser, das beispielsweise durch Diffusion von der Kathodenseite auf die Anodenseite gelangt ist, separiert werden. Hierzu ist im Anodenpfad ein Wasserabscheider angeordnet, dessen Aufgabe in der Regel nicht nur das Separieren von flüssigem Wasser, sondern ferner das Sammeln von Wasser ist. Ist der Wasserabscheider voll, kann ein Drain-Ventil geöffnet und Wasser aus dem Wasserabscheider ausgeleitet werden.

Im Abstellfall kann das im Betrieb des Brennstoffzellensystems anfallende Wasser nicht immer vollständig entfernt werden. Bei tiefen Außentemperaturen besteht somit die Gefahr, dass dieses Wasser gefriert. Um das Brennstoffzellensystem in diesem Zustand zu starten, wird das System soweit vorgeheizt, dass alle Temperaturen im System oberhalb des Gefrierpunkts liegen. Zum Vorheizen werden in der Regel passive Widerstandsheizer verwendet, welche die notwendige Leistungsdichte bereitstellen können. Sie weisen jedoch den Nachteil auf, dass sie im Fehlerfall das System über den für Dichtungen kritischen Temperaturbereich aufheizen können und es so zu einem undichten Wasserstoffkreis kommen kann. Sich selbst abregelnde PTC-Elemente können zwar durch ihre eigensichere Temperaturbegrenzung ein Überhitzen verhindern, ihre Heizleistung ist jedoch deutlich geringer. Es müssen somit eine Vielzahl von PTC-Elementen vorgesehen werden, wodurch sich der Bauraumbedarf um das 3- bis 4-fache erhöht.

DE 10 2011 002729 A1 offenbart ein Verfahren zum Aufheizen eines Brennstoffzellensystems unter Verwendung mindestens eines elektrischen Heizelements, wobei ein Heizelement aus einem Ferritmaterial oder eine Ferritmischung verwendet wird und über die Curie-Temperatur des Ferritmaterials eine Temperaturobergrenze eingestellt wird. Das Heizelement umfasst zwei Induktionsheizspulen.

Die vorliegende Erfindung ist daher mit der Aufgabe befasst, das Aufheizen eines Brennstoffzellensystems vor einem Neustart zu optimieren. Insbesondere soll das Aufheizen mit maximaler Heizleistung bewirkt werden. Zugleich soll die Einhaltung einer maximal zulässigen Temperatur gewährleistet werden.

Zur Lösung der Aufgabe werden das Verfahren mit den Merkmalen des Anspruchs 1 sowie das Brennstoffzellensystem mit den Merkmalen des Anspruchs 5 vorgeschlagen. Vorteilhafte Weiterbildungen der Erfindung sind den jeweiligen Unteransprüchen zu entnehmen. Darüber hinaus wird eine Verwendung eines elektrischen Heizelements angegeben.

### Offenbarung der Erfindung

Vorgeschlagen wird ein Verfahren zum Aufheizen eines Brennstoffzellensystems, insbesondere einer Komponente und/oder eines Bereichs des Brennstoffzellensystems, unter Verwendung mindestens eines elektrischen Heizelements. Es wird ein Heizelement aus einem Ferritmaterial oder einer Ferritmischung verwendet und über die Curie-Temperatur des Ferritmaterials oder der Ferritmischung wird eine Temperaturobergrenze eingestellt.

In einem Fehlerfall, beispielsweise bei einer fehlerhaften Ansteuerung des elektrischen Heizelements, kann das Heizelement nicht heißer werden als die Curie-Temperatur des Ferritmaterials bzw. der Ferritmischung. Dadurch ist sichergestellt, dass in einem Fehlerfall die maximal zulässige Temperatur nicht überschritten wird, so dass temperaturempfindliche Komponenten des Brennstoffzellensystems, wie beispielsweise Dichtungen, keine Schaden nehmen.

Zugleich kann mit Hilfe des elektrischen Heizelements aus Ferritmaterial bzw. aus einer Ferritmischung eine hohe Heizleistung bereitgestellt werden, die ein schnelles Aufheizen des Brennstoffzellensystems im Startfall ermöglicht. Sofern einzelne wasserführende Komponenten und/oder Bereiche gefroren sind, können diese schnell aufgetaut werden.

Über die Curie-Temperatur des Ferritmaterial bzw. der Ferritmischung wird eine Temperaturobergrenze von maximal 90°C, vorzugsweise von maximal 80°C, weiterhin vorzugsweise von maximal 70°C eingestellt. Die vorstehend genannten Maximalwerte begrenzen jeweils einen als sicher angenommenen Temperaturbereich. Bevorzugt wird die Temperaturobergrenze in Abhängigkeit von der Temperaturempfindlichkeit der verbauten Komponenten, insbesondere der verbauten Dichtungen, festgelegt. Auf diese Weise können Undichtigkeiten vermieden werden.

Zur Aktivierung des elektrischen Heizelements werden mit Hilfe einer am Heizelement angeordneten Magnetspule Wirbelströme in das Heizelement induktiv eingekoppelt. Ist die Curie-Temperatur des Materials des Heizelements erreicht, können die Wirbelströme das Ferritmaterial bzw. die Ferritmischung nicht weiter erhitzen. Bis zu diesem Punkt steht die maximale Leistung des Heizelements zur Verfügung.

Erfindungsgemäß wird die Magnetspule mit einer Drehfeld-betriebenen Komponente des Brennstoffzellensystems verschaltet. Auf diese Weise kann die Magnetspule mit der benötigten elektrischen Energie versorgt werden. Da während des Aufheizens des Brennstoffzellensystems die Drehfeld-betriebene Komponente noch außer Betrieb ist, kann die ihr zur Verfügung stehende elektrische Energie an die Magnetspule weitergeleitet werden.

Vorteilhafterweise wird über eine Ansteuerelektronik der Drehfeld-betriebenen Komponente das Drehfeld von der Komponente auf die Magnetspule umgeleitet. Beispielsweise kann in die Ansteuerelektronik ein Aufheizprogramm implementiert werden, das die Umleitung des Drehfelds von der Drehfeld-betriebenen Komponente auf die Magnetspule steuert.

Mit Erreichen einer vorab definierten Solltemperatur kann dann mit Hilfe der Ansteuerelektronik das Drehfeld von der Magnetspule zurück auf die Komponente geleitet werden. Somit kann nun die Drehfeld-betriebene Komponente in Betrieb genommen werden.

Als Drehfeld-betriebene Komponente wird gemäß des Hauptanspruchs 5 ein Anodengas-Rezirkulationsgebläse verwendet. Hierbei handelt es sich um eine vergleichsweise schnell drehende Komponente bzw. Maschine. Da schnell drehenden Maschinen in der Regel ein schnelles Drehfeld zur Verfügung steht, kann hierüber ein noch schnelleres Aufheizen des Heizelements und damit des Brennstoffzellensystems bewirkt werden.

Das darüber hinaus vorgeschlagene Brennstoffzellensystem umfasst mindestens ein elektrisches Heizelement zum Aufheizen des Brennstoffzellensystems, insbesondere einer Komponente und/oder eines Bereichs des Brennstoffzellensystems, im Startfall. Das Heizelement besteht zumindest teilweise aus einem Ferritmaterial oder einer Ferritmischung. Das Heizelement kann beispielsweise einen Ferritkern umfassen.

Das vorgeschlagene Brennstoffzellensystem weist somit ein elektrisches Heizelement auf, das ein Aufheizen des Brennstoffzellensystems nach dem zuvor beschriebenen erfindungsgemäßen Verfahren ermöglicht. Somit können mit Hilfe des Brennstoffzellensystems die gleichen Vorteile erreicht werden. Insbesondere kann ein schnelles Aufheizen des Brennstoffzellensystems unter Einhaltung einer maximal zulässigen Temperatur bewirkt werden.

Das Heizelement ist zumindest abschnittsweise von einer Magnetspule umgeben. Mit Hilfe der Magnetspule können Wirbelströme in das Heizelement induktiv eingekoppelt werden. Die Magnetspule ist vorzugsweise mit einer Drehfeld-betriebenen Komponente des Brennstoffzellensystems, weiterhin vorzugsweise mit einer Ansteuerelektronik der Drehfeld-betriebenen Komponente, verschaltet. Über die Ansteuerelektronik der Drehfeld-betriebenen Komponente kann das Drehfeld von der Komponente auf die Magnetspule umgeleitet werden, um das Brennstoffzellensystem aufzuheizen. Ist eine vorab definierte Solltemperatur erreicht, kann die Aufheizphase abgeschlossen und das Drehfeld zurück auf die Drehfeld-betriebene Komponente geleitet werden.

Die Drehfeld-betriebene Komponente ist erfindungsgemäß ein Anodengas-Rezirkulationsgebläse. Diesem steht in der Regel ein schnelles Drehfeld zur Verfügung, so dass die Heizleistung des Heizelements weiter gesteigert wird.

Die Erfindung wird nachfolgend anhand der beigefügten Zeichnungen näher erläutert. Diese zeigen:
Fig. 1 eine schematische Darstellung eines Heizelements und einer elektrischen Maschine zur Energieversorgung des Heizelements und
Fig. 2 ein Diagramm zur Darstellung der Permeabilität eines Ferritmaterials über die Temperatur in °C.

### Ausführliche Beschreibung der Zeichnungen

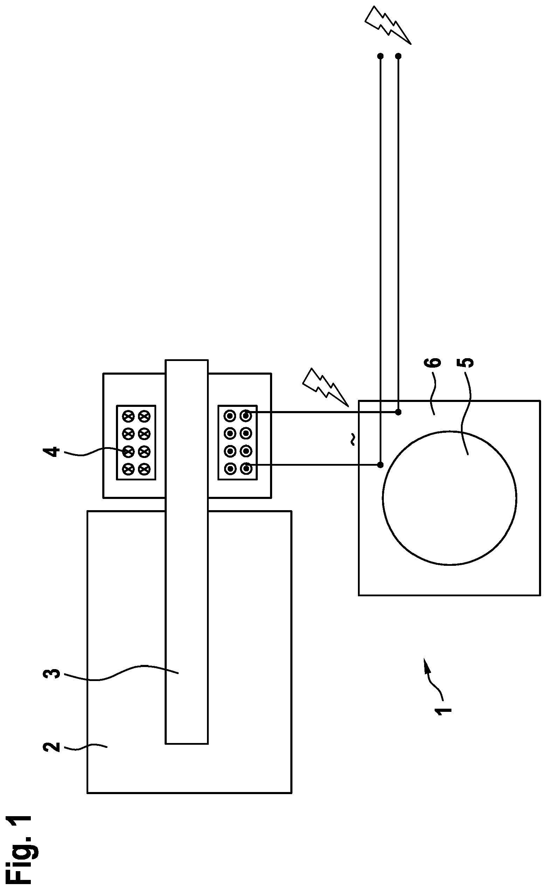

In der Fig. 1 ist beispielhaft ein elektrisches Heizelement 3 aus einem Ferritmaterial bzw. einer Ferritmischung zum Aufheizen einer Komponente 2 eines Brennstoffzellensystems 1 dargestellt. Das Heizelement 3 ist abschnittsweise in der Komponente 2, vorzugsweise in einem Gehäuse der Komponente 2, aufgenommen. Das überstehende freie Ende des Heizelements 3 ist von einer Magnetspule 4 umgeben. Die Magnetspule 4 ist vorliegend mit der Ansteuerelektronik 6 einer weiteren Komponente 5 des Brennstoffzellensystems 1 verbunden. Hierbei handelt es sich um eine Drehfeld-betriebene Komponente 5, beispielsweise um ein Anodengas-Rezirkulationsgebläse des Brennstoffzellensystems 1.

Zum Aufheizen des Brennstoffzellensystems im Startfall wird das der Komponente 5 zur Verfügung stehende Drehfeld über die Ansteuerelektronik 6 an die Magnetspule 4 umgeleitet. Über die Magnetspule 4 erzeugte Wirbelströme werden induktiv in das Heizelement 3 eingekoppelt und das Heizelement 3 heizt sich auf. Ist die Curie-Temperatur des Ferritmaterials bzw. der Ferritmischung des Heizelements 3 erreicht, kann sich das Heizelement 3 nicht weiter aufheizen. In der Folge kann auch die Temperatur im Brennstoffzellensystem 1 nicht weiter ansteigen. Über die Curie-Temperatur des Ferritmaterials bzw. der Ferritmischung der Heizeinrichtung 3 wird somit eine zuverlässige Temperaturbegrenzung erreicht.

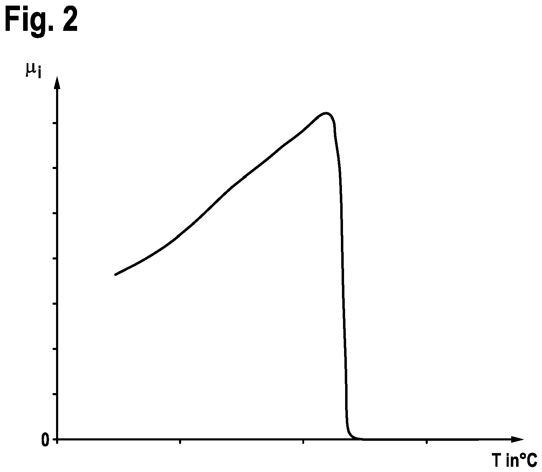

In der Fig. 2 ist beispielhaft die Permeabilität µᵢ eines Ferritmaterials über der Temperatur T in °C dargestellt. Das Diagramm zeigt deutlich, dass die Permeabilität erst ansteigt und dann abrupt abfällt. Der Abfall liegt darin begründet, dass das Ferritmaterial seine Curie-Temperatur erreicht hat. Mit Erreichen der Curie-Temperatur verliert das Ferritmaterial seine magnetischen Eigenschaften und kann sich nicht weiter aufheizen.

## Patentansprüche

1. Verfahren zum Aufheizen eines Brennstoffzellensystems (1), insbesondere einer Komponente (2) und/oder eines Bereichs des Brennstoffzellensystems (1), unter Verwendung mindestens eines elektrischen Heizelements (3), wobei ein Heizelement (3) aus einem Ferritmaterial oder einer Ferritmischung verwendet wird und über die Curie-Temperatur des Ferritmaterials oder der Ferritmischung Temperaturobergrenze von maximal 90°C, vorzugsweise von maximal 80°C, weiterhin vorzugsweise von maximal 70°C eingestellt wird, wobei mit Hilfe einer am Heizelement (3) angeordneten Magnetspule (4) Wirbelströme in das Heizelement (3) induktiv eingekoppelt werden,
**dadurch gekennzeichnet, dass** die Magnetspule (4) mit einer Drehfeld-betriebenen Komponente (5) des Brennstoffzellensystems (1) verschaltet wird.

2. Verfahren nach Anspruch 1,
**dadurch gekennzeichnet, dass** über eine Ansteuerelektronik (6) der Drehfeld-betriebenen Komponente (5) das Drehfeld von der Komponente (5) auf die Magnetspule (4) umgeleitet wird.

3. Verfahren nach Anspruch 5 2,
**dadurch gekennzeichnet, dass** mit Erreichen einer vorab definierten Solltemperatur mit Hilfe der Ansteuerelektronik (6) das Drehfeld von der Magnetspule (4) zurück auf die Komponente (5) geleitet wird.

4. Verfahren nach einem der vorhergehenden Ansprüche
**dadurch gekennzeichnet, dass** ein Anodengas-Rezirkulationsgebläse als Drehfeld-betriebene Komponente (5) verwendet wird.

5. Brennstoffzellensystem (1), umfassend mindestens ein elektrisches Heizelement (3) zum Aufheizen des Brennstoffzellensystems (1), insbesondere einer Komponente (2) und/oder eines Bereichs des Brennstoffzellensystems (1), im Startfall, wobei
das Heizelement (3) zumindest teilweise aus einem Ferritmaterial oder einer Ferritmischung besteht, beispielsweise einen Ferritkern umfasst, wobei die Curie-Temperatur des Ferritmaterials oder der Ferritmischung eine Temperaturobergrenze von maximal 90°C, vorzugsweise von maximal 80°C, weiterhin vorzugsweise von maximal 70°C aufweist, wobei das Heizelement (3) zumindest abschnittsweise von einer Magnetspule (4) umgeben ist, die mit einer Drehfeld-betriebenen Komponente (5) des Brennstoffzellensystems (1), weiterhin vorzugsweise mit einer Ansteuerelektronik (6) der Komponente (5), verschaltet ist, **dadurch gekennzeichnet, dass** die Drehfeld-betriebene Komponente (5) ein Anodengas-Rezirkulationsgebläse ist.

## Claims

1. Method for heating a fuel cell system (1), in particular a component (2) and/or a region of the fuel cell system (1), using at least one electrical heating element (3), wherein a heating element (3) composed of a ferrite material or a ferrite mixture is used and an upper temperature limit of at most 90°C, preferably of at most 80°C, further preferably of at most 70°C, is set by means of the Curie temperature of the ferrite material or the ferrite mixture, wherein
eddy currents are inductively coupled into the heating element (3) with the aid of a magnet coil (4) arranged on the heating element (3),
**characterized in that** the magnet coil (4) is interconnected with a rotating field-driven component (5) of the fuel cell system (1).

2. Method according to Claim 1,
**characterized in that** the rotating field is redirected from the component (5) to the magnet coil (4) by means of drive electronics (6) of the rotating field-driven component (5).

3. Method according to Claim 2,
**characterized in that** the rotating field is directed from the magnet coil (4) back to the component (5) with the aid of the drive electronics (6) when a predefined target temperature is reached.

4. Method according to any of the preceding claims, **characterized in that** an anode gas recirculation blower is used as the rotating field-driven component (5).

5. Fuel cell system (1), comprising at least one electrical heating element (3) for heating the fuel cell system (1), in particular a component (2) and/or a region of the fuel cell system (1), during starting, wherein the heating element (3) at least partially comprises a ferrite material or a ferrite mixture, for example comprises a ferrite core, wherein the Curie temperature of the ferrite material or the ferrite mixture has an upper temperature limit of at most 90°C, preferably of at most 80°C, further preferably of at most 70°C, wherein the heating element (3) is surrounded at least in sections by a magnet coil (4) which is interconnected with a rotating field-driven component (5) of the fuel cell system (1), further preferably with drive electronics (6) of the component (5),
**characterized in that** the rotating field-driven component (5) is an anode gas recirculation blower.

## Revendications

1. Procédé de chauffage d'un système de pile à combustible (1), notamment d'un composant (2) et/ou d'une zone du système de pile à combustible (1), en utilisant au moins un élément chauffant électrique (3), un élément chauffant (3) composé d'un matériau de ferrite ou composé d'un mélange de ferrites étant utilisé, et une limite supérieure de température de 90 °C maximum, de préférence de 80 °C maximum, encore de préférence de 70 °C maximum étant réglée par le biais de la température de Curie du matériau de ferrite ou du mélange de ferrites,
des courants de Foucault étant injectés par couplage inductif dans l'élément chauffant (3) à l'aide d'une bobine magnétique (4) disposée sur l'élément chauffant (3),
**caractérisé en ce que** la bobine magnétique (4) est connectée à un composant (5) fonctionnant avec un champ tournant du système de pile à combustible (1).

2. Procédé selon la revendication 1,
**caractérisé en ce que** le champ tournant est dévié du composant (5) sur la bobine magnétique (4) par le biais d'une électronique de commande (6) du composant (5) fonctionnant avec un champ tournant.

3. Procédé selon la revendication 2,
**caractérisé en ce que**, lorsqu'une température de consigne préalablement définie est atteinte, le champ tournant est renvoyé de la bobine magnétique (4) au composant (5) à l'aide de l'électronique de commande (6).

4. Procédé selon l'une des revendications précédentes, **caractérisé en ce qu'**un ventilateur de recirculation de gaz d'anode est utilisé en tant que composant (5) fonctionnant avec un champ tournant.

5. Système de pile à combustible (1), comprenant au moins un élément de chauffage électrique (3) destiné à chauffer le système de pile à combustible (1), notamment un composant (2) et/ou une zone du système de pile à combustible (1), en cas de démarrage,
l'élément chauffant (3) étant constitué au moins partiellement d'un matériau de ferrite ou d'un mélange de ferrites, par exemple comprend un noyau en ferrite, la température de Curie du matériau de ferrite ou du mélange de ferrites présentant une limite supérieure de température de 90 °C maximum, de préférence de 80 °C maximum, encore de préférence de 70 °C maximum, l'élément chauffant (3) étant entouré, au moins dans certaines portions, par une bobine magnétique (4) qui est connectée à un composant (5) fonctionnant avec un champ tournant du système de pile à combustible (1), en outre de préférence à une électronique de commande (6) du composant (5),
**caractérisé en ce que** le composant (5) fonctionnant avec un champ tournant est un ventilateur de recirculation de gaz d'anode.
